# EUROPEAN PATENT APPLICATION

(11) **EP 4 671 421 A1**
(43) Date of publication of application: **31.12.2025**
(21) Application number: 25171875.5
(22) Date of filing: 23.04.2025
(51) Int. Cl.: D03J 1/00

(54) **LOOM ABNORMALITY DETECTOR**

(30) Priority: 25.06.2024 JP 2024102279
(71) Applicant: Kabushiki Kaisha Toyota Jidoshokki, Kariya-shi, Aichi-ken 448-8671 (JP)
(72) Inventor: INOUE, Ryo, Kariya-shi, Aichi, 448-8671 (JP); NAKAYA, Ryo, Kariya-shi, Aichi, 448-8671 (JP); SUZUKI, Akihiro, Kariya-shi, Aichi, 448-8671 (JP)
(74) Representative: TBK

(57) **Abstract**

A loom abnormality detector (30) includes a classification model that has learned a normal image that shows a shed portion (R) in a normal state and an anomalous image that shows the shed portion (R) in an abnormal state as a shed portion image that shows the shed portion (R) defined by a reed (16), upper warp yarns (Tu) above a weft yarn (Y), and lower warp yarns (Td) below the weft yarn (Y), and a cloth fell (Wa). The loom abnormality detector (30) detects a weaving abnormality from the shed portion image using the classification model. The loom abnormality detector (30) further includes a pseudo-anomalous image creation unit (50) configured to artificially create the abnormal image from the shed portion image. the pseudo-anomalous image creation unit (50) includes a provisionally specifying unit (51), a reference line illustrating unit (52), a decision unit (53), and an illustrating unit (54).

## Description

### BACKGROUND ART

The present invention relates to a loom abnormality detector.

In a loom, a weft yarn is inserted into a shed portion defined by warp yarns, thereby weaving fabric. However, when an abnormality such that a broken warp yarn goes into a range of the shed portion occurs in the shed portion, quality of the woven fabric deteriorates. Here, for example, as disclosed in Japanese Patent Application Publication No. 2020-196972, the loom detects failures of the shed portion, that is, weaving abnormalities, from images of the shed portion captured by a camera.

In such detection of the weaving abnormalities of the loom, for example, as disclosed in Japanese Patent Application Publication No. 2021-157303, a classification model that has learned training data may be used. In the Publication No. 2021-157303, the classification model learns normal image data and pseudo-anomalous image data of equipment and determines whether an abnormality of the equipment is present or not. The pseudo-anomalous image data are data created by modifying a part of an image of the normal image data to artificially represent the abnormality.

When the classification model is used for detection of weaving abnormalities in a loom, in order to increase anomalous image data to be learned by the classification model, pseudo-anomalous image data are created by modifying a part of a shed portion image that shows the shed portion. In order to create such pseudo-anomalous image data of the shed portion, in the shed portion image captured by a camera, it is necessary to specify a range of the shed portion, that is, three points of an upper warp yarn end point of an upper warp yarn extending forward out from a reed, a lower warp yarn end point of a lower warp yarn extending forward out from the reed, and a cloth fell with high accuracy. However, a component near the shed portion may be shown in the shed portion image captured by the camera. In this case, when any of the upper warp yarn end point, the lower warp yarn end point, and the cloth fell is hidden behind the component in the shed portion image, the three points of the upper warp yarn end point, the lower warp yarn end point, and the cloth fell may not be specified with high accuracy. Then, the range of the shed portion that is specified in the pseudo-anomalous image data becomes inaccurate, so that accuracy of classification in the classification model using the pseudo-anomalous image data is decreased.

### SUMMARY

In accordance with an aspect of the present invention, there is provided a loom abnormality detector that includes a classification model that has learned a normal image that shows a shed portion in a normal state and an anomalous image that shows the shed portion in an abnormal state as a shed portion image that shows the shed portion defined by a reed, upper warp yarns above a weft yarn, and lower warp yarns below the weft yarn, and a cloth fell at which the upper warp yarns intersect with the lower warp yarns. The loom abnormality detector is configured to detect a weaving abnormality from the shed portion image captured by a camera using the classification model. The loom abnormality detector further includes a pseudo-anomalous image creation unit configured to artificially create the abnormal image from the shed portion image captured by the camera. The pseudo-anomalous image creation unit includes a provisionally specifying unit configured to provisionally specify a virtual upper warp yarn end point, a virtual lower warp yarn end point, and a virtual cloth fell point in the shed portion image displayed on an operation screen of a display unit, the virtual upper warp yarn end point being a point that is assumed to an upper warp yarn end point of the upper warp yarn extending forward out from the reed and defining an inlet of the shed portion, the virtual lower warp yarn end point being a point that is assumed to a lower warp yarn end point of the lower warp yarn extending forward out from the reed and defining, together with the upper warp yarn, the inlet of the shed portion, the virtual cloth fell point being a point that is assumed to be an end point of the cloth fell at the inlet of the shed portion, a reference line illustrating unit configured to illustrate an upper reference line that connects the virtual upper warp yarn end point to the virtual cloth fell point and a lower reference line that connects the virtual lower warp yarn end point to the virtual cloth fell point, a decision unit configured to decide positions of the virtual upper warp yarn end point, the virtual lower warp yarn end point, and the virtual cloth fell point, which are provisionally specified in a state where the upper reference line is aligned with the upper warp yarn and the lower reference line is aligned with the lower warp yarn, and an illustrating unit configured to illustrate a pseudo-abnormality in the shed portion defined by the virtual upper warp yarn end point, the virtual lower warp yarn end point, and the virtual cloth fell point decided by the decision unit.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a plan view schematically illustrating a loom;
FIG. 2 is a view illustrating a shed portion;
FIG. 3 is a view illustrating an operation screen and a shed portion image;
FIG. 4 is a block diagram illustrating a configuration of a loom abnormality detector;
FIG. 5 is a block diagram illustrating a configuration of a pseudo-anomalous image creation unit;
FIG. 6 is a view of the operation screen displaying a virtual upper warp yarn end point, a virtual lower warp yarn end point, and connecting reference lines;
FIG. 7 is a view of the operation screen displaying an upper reference line and a lower reference line;
FIG. 8 is a view of the operation screen displaying a state in which the virtual upper warp yarn end point, the virtual lower warp yarn end point, and the virtual cloth fell point are decided;
FIG. 9 is a view of an operation screen displaying an upper reference line according to a modification;
FIG. 10 is a view of the operation screen displaying the upper reference line and a lower reference line according to the modification; and
FIG. 11 is a view of the operation screen when a virtual upper warp yarn end point is slightly adjusted according to the modification.

### DETAILED DESCRIPTION OF THE EMBODIMENTS

The following will describe an embodiment of a loom abnormality detector according to the present invention.

### <Loom>

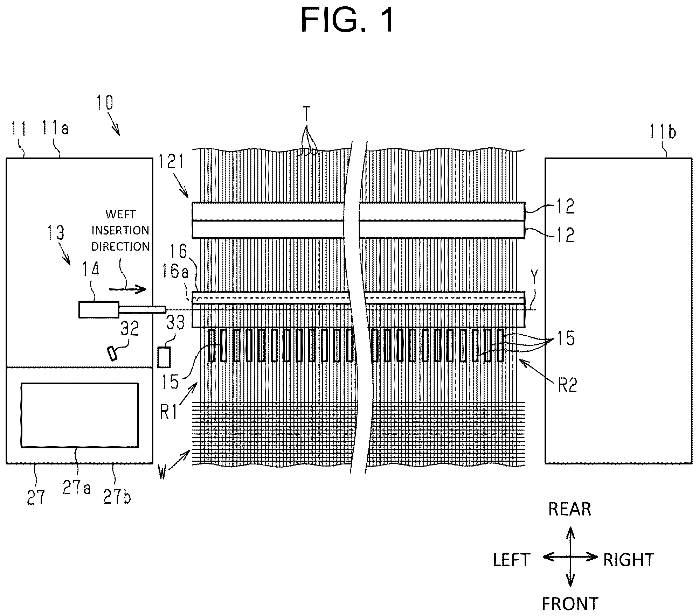

As illustrated in FIG. 1, a loom 10 includes a frame 11. The frame 11 includes a pair of side frames 11a, 11b. The pair of the side frames 11a, 11b is located on opposite ends of the loom 10 in a left-right direction thereof. The one side frame 11a is located on the left end of the loom 10 and the other side frame 11b is located on the right end of the loom 10, of the pair of the side frames 11a, 11b.

A plurality of warp yarns T are arranged side by side in the left-right direction of the loom 10. The warp yarns T extend in a front-rear direction of the loom 10. The warp yarns T are drawn from supply rolls that are provided in a rear portion of the frame 11. Woven fabric W woven using the warp yarns T is wound up by a take-up roll that is provided in a front portion of the frame 11 Here, illustrations of the supply rolls and the take-up roll are omitted. The warp yarns T move forward in the front-rear direction of the loom 10.

The loom 10 includes a warp yarn shedding device 121 that makes a shed formed by the warp yarns T. The warp yarn shedding device 121 has, for example, two shafts 12. The two shafts 12 are arranged in the front-rear direction of the loom 10. A plurality of heddles, which are not illustrated, are provided in each of the shafts 12. The plurality of the heddles are arranged in the left-right direction of the loom 10. Some of the plurality of the warp yarns T arranged in the left-right direction of the loom 10 are threaded through the heddles in one of the shafts 12, and the other of the plurality of the warp yarns T are threaded through the heddles in the other of the shafts 12. The shafts 12 reciprocate in an up-down direction of the loom 10. While one of the shafts 12 moves upward, the other of the shafts 12 moves downward. While one of the shafts 12 moves downward, the other of the shafts 12 moves upward.

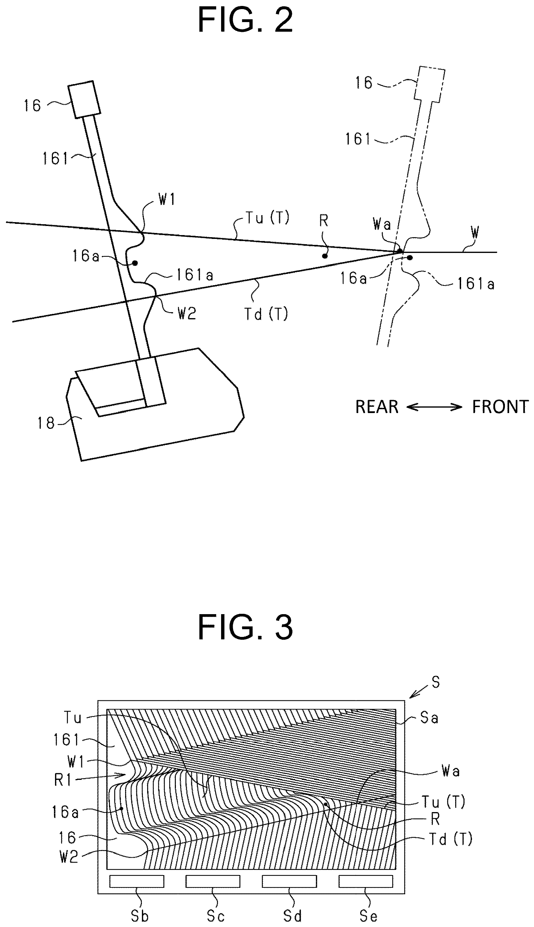

As illustrated in FIG. 2, when one of the shafts 12 moves upward, the warp yarns T that are threaded through the heddles in the one of the shafts 12 are defined as upper warp yarns Tu, and when the other of the shafts 12 moves downward, the warp yarns T that are threaded through the heddles in the other of the shafts 12 are defined as lower warp yarns Td. Accordingly, the warp yarns T as the upper warp yarns Tu and the warp yarns T as the lower warp yarns Td are alternately interchanged according to the up-down motion of the pair of the shafts 12.

A shed portion R formed by the warp yarns T is defined by a reed 16, which will be described later, the upper warp yarns Tu, the lower warp yarns Td, and a cloth fell Wa at which the upper warp yarns Tu intersect with the lower warp yarns Td. A rear end of the shed portion R is defined by the reed 16, and a front end of the shed portion R is defined by the cloth fell Wa. In addition, an upper end and a lower end of the shed portion R are defined by a group of the upper warp yarns Tu and a group of the lower warp yarns Td, respectively. Here, when viewed in the left-right direction of the loom 10, the shed portion R is formed in a substantially triangular shape.

Note that in the following description, when the loom 10 is viewed in the left-right direction thereof, an end point of the upper warp yarn Tu extending forward out from the reed 16 is defined as an upper warp yarn end point W1, and an end point of the lower warp yarn Td extending forward out from the reed 16 is defined as a lower warp yarn end point W2. Then, when the loom 10 is viewed in the left-right direction thereof, an inside of a triangle formed by connecting the three points of the upper warp yarn end point W1, the lower warp yarn end point W2, and the cloth fell Wa with straight lines is defined as a range of the shed portion R.

As illustrated in FIG. 1, the shed portion R has an inlet R1 and an outlet R2. The inlet R1 is located at a left end of the shed portion R in the left-right direction of the loom 10. The outlet R2 is located at a right end of the shed portion R in the left-right direction of the loom 10.

The loom 10 includes a weft insertion device 13. The weft insertion device 13 has a main nozzle 14 and a plurality of sub nozzles 15.

The main nozzle 14 is attached to the one side frame 11a. Air is injected from the main nozzle 14 to insert a weft yarn Y through the shed portion R in the left-right direction of the loom 10. Note that the weft yarn Y enters the shed portion R through the inlet R1. After the weft yarn Y travels through the shed portion R in the left-right direction of the loom 10, an end portion of the weft yarn Y exits the shed portion R through the outlet R2. A direction in which the weft yarn Y is inserted by the main nozzle 14 is referred to as a weft insertion direction. The weft insertion direction is a direction from a left side toward a right side in the left-right direction of the loom 10.

The plurality of the sub nozzles 15 are located in front of the warp yarn shedding device 121 in the front-rear direction of the loom 10. The plurality of the sub nozzles 15 are located downstream of the main nozzle 14 in the weft insertion direction. The plurality of the sub nozzles 15 are arranged side by side in the left-right direction of the loom 10. Air is injected from each of the sub nozzles 15 against the weft yarn Y inserted into the shed portion R of the warp yarns T.

The weft yarn Y inserted into the shed portion R is beaten by the reed 16. The reed 16 is disposed between the warp yarn shedding device 121 and the plurality of the sub nozzles 15 in the front-rear direction of the loom 10. The reed 16 is located downstream of the main nozzle 14 in the weft insertion direction.

As illustrated in FIG. 2, the reed 16 includes a plurality of reed dents 161. The plurality of the reed dents 161 are arranged side by side in the left-right direction of the loom 10. Each of the warp yarns T passes between the reed dents 161 arranged side by side in the left-right direction of the loom 10. A recess 161a is formed in a front surface of each of the reed dents 161. The recesses 161a of the plurality of the reed dents 161 are arranged side by side in the left-right direction of the loom 10, which forms a weft yarn traveling passage 16a in the reed 16. The weft yarn Y inserted into the shed portion R of the warp yarns T travels through the weft yarn traveling passage 16a.

The reed 16 is fixed to a sley 18 that reciprocates in the front-rear direction of the loom 10. Accordingly, the reed 16 reciprocates in the front-rear direction of the loom 10 together with the sley 18. The reed 16 moves to a front side of the loom 10 to beat the weft yarn Y inserted into the shed portion R. The weft yarn Y that travels through the weft yarn traveling passage 16a is beaten against the cloth fell Wa.

The loom 10 weaves fabric by repeating shedding operation of the warp yarns T by the warp yarn shedding device 121, inserting operation of the weft yarn Y by the weft insertion device 13, and beating operation by the reed 16 while moving the warp yarns T forward in the front-rear direction of the loom 10.

As illustrated in FIG. 1, the loom 10 has an operation unit 27. The operation unit 27 is provided in the one side frame 11a. The operation unit 27 is located in front of the main nozzle 14 in the front-rear direction of the loom 10. The operation unit 27 has a display unit 27a that displays an operation screen of the loom 10 and a housing 27b in which the display unit 27a is housed.

### <Loom abnormality detector>

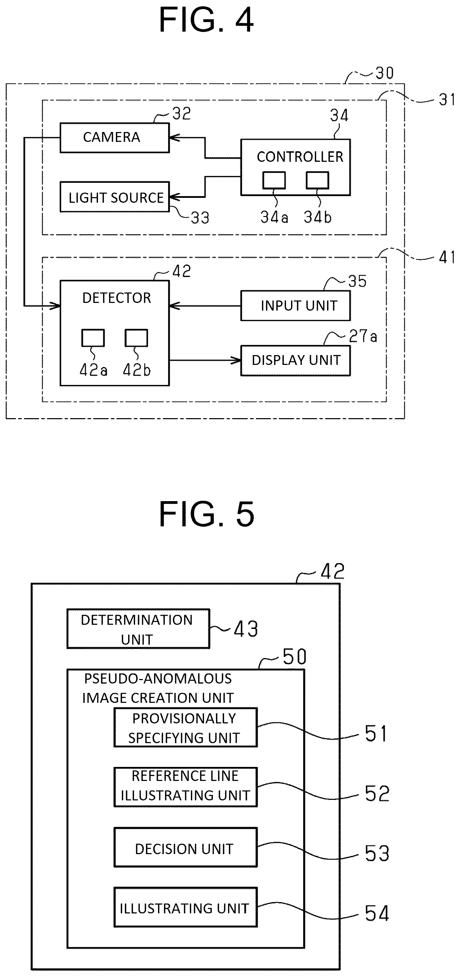

As illustrated in FIG. 4, a loom abnormality detector 30 has an imaging device 31 and a computer 41. The imaging device 31 includes a camera 32, a light source 33, and a controller 34. In addition, the computer 41 has a detector 42, an input unit 35, and the display unit 27a. The loom abnormality detector 30 detects weaving abnormalities from images that each show the shed portion R, which are captured by the camera 32, using the detector 42.

As illustrated in FIG. 3, examples of the weaving abnormalities includes a state where a part of one of the upper warp yarns Tu is located in the shed portion R. Examples of the weaving abnormalities also include a state where a part of one of the lower warp yarns Td is located in the shed portion R, a state where a size of the shed portion R is decreased by the loosened upper warp yarns Tu or the loosened lower warp yarns Td, and a state where a part of one of the warp yarns T is located outside the shed portion R.

### <Imaging device>

The camera 32 is a digital camera. The camera 32 has an image sensor. Examples of the image sensor include a charge coupled device image sensor (CCD image sensor) and a complementary metal oxide semiconductor image sensor (CMOS image sensor).

As illustrated in FIG. 1, the camera 32 is located at a position that allows the camera 32 to capture an image of the shed portion R from a side of the inlet R1. More specifically, the camera 32 is provided in the one side frame 11a. The camera 32 captures the image of the shed portion R from an upstream side toward a downstream side in the weft insertion direction of the weft yarn Y. In other words, the camera 32 captures the image of the shed portion R from a left side thereof. The image captured by camera 32 is stored in a storage unit of the camera 32 as image data of the shed portion R. Here, an illustration of the storage unit of the camera 32 is omitted. The light source 33 is an LED light. The light source 33 is located at a position to illuminate the shed portion R.

As illustrated in FIG. 4, the controller 34 has a processor 34a and a main storage unit 34b. Examples of the processor 34a include a central processing unit (CPU), a graphics processing unit (GPU), and a digital signal processor (DSP). The main storage unit 34b includes a random access memory (RAM) and a read only memory (ROM). The main storage unit 34b stores program codes or commands configured to cause the processor 34a to execute processing. The main storage unit 34b, that is, a computer readable medium, includes any available media accessible by a general-purpose or a dedicated computer. The controller 34 may be configured by a hardware circuit such as an application specific integrated circuit (ASIC) or a field programmable gate array (FPGA). The controller 34, which is a processing circuit, may include one or more processors operating in accordance with computer programs, one or more hardware circuits such as an ASIC or FPGA, or a combination thereof.

The controller 34 is connected to the camera 32 and the light source 33. The controller 34 controls a point of time when the camera 32 captures an image and a point of time when the light source 33 emits light. The camera 32 captures an image in response to a signal input from the controller 34 to the camera 32 and the light source 33 emits light in response to a signal input from the controller 34 to the light source 33. The signals are input to the camera 32 and the light source 33 simultaneously, so that the light source 33 illuminates the shed portion R at the same time that the camera 32 captures the image of the shed portion R.

### <Computer>

The detector 42 has a processor 42a and a main storage unit 42b. Examples of the processor 42a include a CPU, a GPU, and a DSP. The main storage unit 42b includes a RAM and a ROM. The main storage unit 42b stores program codes or commands configured to cause the processor 42a to execute processing. The main storage unit 42b, that is, a computer readable medium, includes any available media accessible by a general-purpose or a dedicated computer. The detector 42 may be configured by a hardware circuit such as an ASIC or an FPGA. The detector 42, which is a processing circuit, may include one or more processors operating in accordance with computer programs, one or more hardware circuits such as an ASIC or FPGA, or a combination thereof.

The main storage unit 42b stores a program for a pseudo-anomalous image creation application. The pseudo-anomalous image creation application includes a program that cause the processor 42a to execute display processing.

The detector 42 is electrically connected to the input unit 35 and the display unit 27a. The input unit 35 is, for example, a mouse. The input unit 35 may be changed as appropriate to a stylus or the like other than the mouse. The input unit 35 is provided in order to operate the operation unit 27. The display unit 27a is a display. In addition, the detector 42 is electrically connected to the camera 32. The detector 42 obtains the image data containing the image that shows the shed portion R, which is stored in the camera 32.

Here, the image that shows the shed portion R is referred to as the "shed portion image". In the shed portion image, the warp yarns T above the weft yarn Y are the upper warp yarns Tu, and the warp yarns T below the weft yarn Y are the lower warp yarns Td. Thus, the shed portion R is defined by the reed 16, the upper warp yarns Tu above the weft yarn Y, the lower warp yarns Td below the weft yarn Y, and the cloth fell Wa at which the upper warp yarns Tu intersect with the lower warp yarns Td.

The image data obtained by the detector 42 are divided into three types of normal image data, anomalous image data, and pseudo-anomalous image data. The normal image data are data containing normal images captured by the camera 32 in a state where the shed portion R is in a normal state. Note that the normal state of the shed portion R is a state where there is no abnormality such that a part of one of the warp yarns T is located in the shed portion R. The anomalous image data are data containing anomalous images captured by the camera 32 in a state where the shed portion R is in an abnormal state. The pseudo-anomalous image data are data containing anomalous images that are artificially created by a pseudo-anomalous image creation unit 50, which will described later.

As illustrated in FIG. 5, the detector 42 has a determination unit 43 and the pseudo-anomalous image creation unit 50.

The detector 42, that is, the determination unit 43 and the pseudo-anomalous image creation unit 50 are functional elements that operate when the processor 42a executes the program stored in the main storage unit 42b.

The determination unit 43 has a classification model that has learned the normal images and the anomalous images (including the pseudo-anomalous images). The determination unit 43 detects weaving abnormalities from the image of the shed portion R captured by the camera 32 ,that is, the shed portion image, using the classification model. Note that shed portion images to be learned by the classification model preferably show that the reed 16 is located at a position most retracted from the cloth fell Wa and an opening of the shed portion R is the maximum size. However, as long as the shed portion R is open to some extent, the shed portion images may be changed as appropriate.

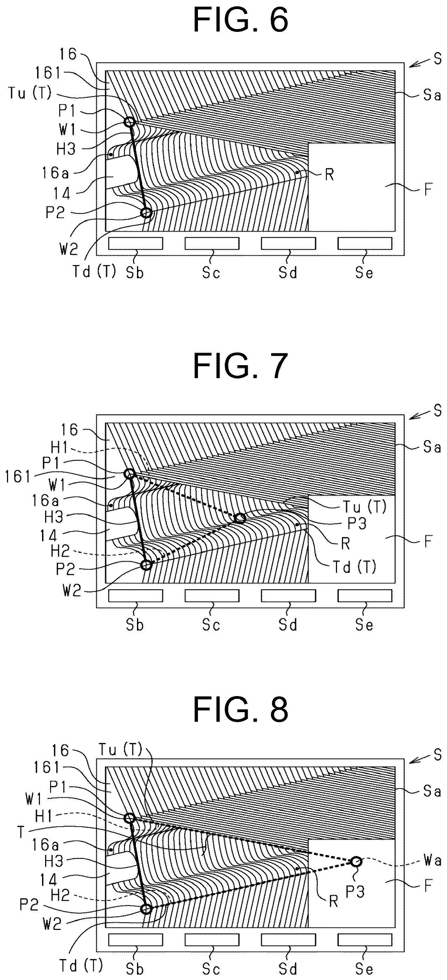

In the following description, the word "cloth fell Wa" means an end point of the cloth fell at the inlet R1. As illustrated in FIG. 3, the specified range of the shed portion R is the inside of the triangle formed by connecting the three points of the upper warp yarn end point W1, the lower warp yarn end point W2, and the cloth fell Wa with straight lines, which are shown in the shed portion image. In addition, as illustrated in FIG. 6, the range of the shed portion R is preferably located in front of the main nozzle 14.

Here, the anomalous image is an image that shows an abnormality of the shed portion R actually captured by the camera 32. However, since the actual abnormalities occur infrequently in the loom 10, the number of the anomalous images captured by the camera 32 is not so large. On the other hand, in order to improve an accuracy of classification by the classification model, it is preferable for the classification model to learn more anomalous images. For this reason, the number of the anomalous images is increased by artificially creating the anomalous images using the pseudo-anomalous image creation unit 50. In the following description, anomalous image data containing the pseudo-anomalous images are referred to as "pseudo-anomalous image data".

### <Pseudo-anomalous image creation unit>

The pseudo-anomalous image creation unit 50 is operated by the pseudo-anomalous image creation application. The pseudo-anomalous image creation unit 50 artificially creates the anomalous images from the shed portion images captured by the camera 32.

As illustrated in FIG. 5, the pseudo-anomalous image creation unit 50 has a provisionally specifying unit 51, a reference line illustrating unit 52, a decision unit 53, and an illustrating unit 54. The pseudo-anomalous image creation unit 50 performs image processing on the normal images of the shed portion R captured by the camera 32. That is, the pseudo-anomalous image creation unit 50 performs the image processing on the normal shed portion images.

As illustrated in FIG. 3, the shed portion image shows the inlet R1 of the shed portion R. In detail, the shed portion image shows the upper warp yarn Tu and the lower warp yarn Td that define the inlet R1, and the reed 16 and the weft yarn traveling passage 16a that are located downstream of the inlet R1 in the weft insertion direction. Hereinafter, the words of the "upper warp yarn Tu" and the "lower warp yarn Td" mean the upper warp yarn and the lower warp yarn that define the inlet R1 of the shed portion R.

The pseudo-anomalous image creation unit 50 obtains the image data containing the shed portion image, which is stored in the camera 32, and causes the obtained image data to be displayed on an operation screen S of the display unit 27a. The operation screen S is a screen on which a creator creates the pseudo-anomalous image. In addition, the pseudo-anomalous image creation unit 50 causes a shed portion image display area Sa, a first operation button Sb, a second operation button Sc, a third operation button Sd, and a fourth operation button Se to be displayed on the operation screen S.

The shed portion image is displayed in the shed portion image display area Sa. The first operation button Sb is pressed to display the desired shed portion image in the shed portion image display area Sa. The second operation button Sc is pressed when the pseudo-anomalous image is created in the shed portion image display area Sa. The third operation button Sd is pressed when a pseudo-abnormality is illustrated in the shed portion image display area Sa. The fourth operation button Se is pressed when the pseudo-anomalous image data containing the created pseudo-anomalous image are stored.

### <Provisionally specifying unit>

As illustrated in FIG. 6 and FIG. 7, the provisionally specifying unit 51 provisionally specifies a virtual upper warp yarn end point P1, a virtual lower warp yarn end point P2, and a virtual cloth fell point P3 in the shed portion image displayed in shed portion image display area Sa on the operation screen S. The virtual upper warp yarn end point P1 is a point that is assumed to be the upper warp yarn end point W1 of the upper warp yarn Tu extending forward out from the reed 16. The virtual upper warp yarn end point P1 may be specified at any position in the shed portion image. However, when the upper warp yarn end point W1 is shown in the shed portion image, the virtual upper warp yarn end point P1 is preferably specified on the upper warp yarn end point W1.

The virtual lower warp yarn end point P2 is a point that is assumed to be the lower warp yarn end point W2 of the lower warp yarn Td extending forward out from the reed 16. The virtual lower warp yarn end point P2 may be specified at any position in the shed portion image. When the lower warp yarn end point W2 is shown at the shed portion image, the virtual lower warp yarn end point P2 is preferably specified on the lower warp yarn end point W2. The virtual cloth fell point P3 is a point that is assumed to be the cloth fell Wa. The virtual cloth fell point P3 may be specified at any position. When the cloth fell Wa is shown in the shed portion image, the virtual cloth fell point P3 is preferably specified on the cloth fell Wa.

The virtual upper warp yarn end point P1, the virtual lower warp yarn end point P2, and the virtual cloth fell point P3 are provisionally specified by operating the input unit 35. More specifically, when an operator operates the input unit 35 to specify desired positions in the shed portion image display area Sa, the virtual upper warp yarn end point P1, the virtual lower warp yarn end point P2, and the virtual cloth fell point P3 are specified and shown in the shed portion image.

Then, as illustrated in FIG. 3, when the three points of the upper warp yarn end point W1, the lower warp yarn end point W2, and the cloth fell Wa are shown in the shed portion image displayed in the shed portion image display area Sa, the virtual upper warp yarn end point P1, the virtual lower warp yarn end point P2, and the virtual cloth fell point P3 are specified on the three points. As a result, the range of the shed portion R is accurately specified inside the triangle formed by connecting three points of the virtual upper warp yarn end point P1, the virtual lower warp yarn end point P2, and the virtual cloth fell point P3.

On the other hand, in the loom 10, there is a component F around the shed portion R, such as a portion of one of the shafts 12 and a portion of the main nozzle 14. When the camera 32 captures an image of the shed portion R, the component F is shown in the captured shed portion image, which hides any of the upper warp yarn end point W1, the lower warp yarn end point W2, or the cloth fell Wa. For example, as illustrated in FIG. 6, the cloth fell Wa is hidden behind the component F.

In this case, the three points of the virtual upper warp yarn end point P1, the virtual lower warp yarn end point P2, and the virtual cloth fell point P3 are not specified in the shed portion image with high accuracy, so that the range of the shed portion R is not specified with high accuracy. Even in such a case, as illustrated in FIG. 7, the provisionally specifying unit 51 provisionally specifies the three points of the virtual upper warp yarn end point P1, the virtual lower warp yarn end point P2, and the virtual cloth fell point P3 in the shed portion image displayed in the shed portion image display area Sa. As illustrated in FIG. 7, the cloth fell Wa is hidden behind the component F. In this case, the virtual cloth fell point P3 may be provisionally specified at a position where the cloth fell Wa is assumed to be located or at any other position.

### <Reference line illustrating unit>

The reference line illustrating unit 52 illustrates an upper reference line H1 and a lower reference line H2 in the shed portion image. The upper reference line H1 connects the virtual upper warp yarn end point P1 to the virtual cloth fell point P3. The lower reference line H2 connects the virtual lower warp yarn end point P2 to the virtual cloth fell point P3. Here, the virtual upper warp yarn end point P1, the virtual lower warp yarn end point P2, and the virtual cloth fell point P3 are provisionally specified in the shed portion image by the provisionally specifying unit 51. In addition, when the virtual upper warp yarn end point P1 and the virtual lower warp yarn end point P2 are provisionally specified in the shed portion image, the reference line illustrating unit 52 displays a connecting reference line H3 that connects the virtual upper warp yarn end point P1 to the virtual lower warp yarn end point P2. The upper reference line H1 and the lower reference line H2 are shown in the shed portion image by broken lines, and the connecting reference line H3 is shown in the shed portion image by a solid line. That is, the reference line illustrating unit 52 causes the upper reference line H1 and the lower reference line H2 to be displayed in a different manner from the connecting reference line H3.

In addition, in a state where the virtual upper warp yarn end point P1 and the virtual lower warp yarn end point P2 are provisionally specified and the connecting reference line H3 is shown in the shed portion image, when the operator operates the input unit 35 to specify any position in the shed portion image, the reference line illustrating unit 52 causes the virtual cloth fell point P3 to be displayed at the specified position. In addition, the reference line illustrating unit 52 causes the upper reference line H1 that connects the virtual upper warp yarn end point P1 to the virtual cloth fell point P3 and the lower reference line H2 that connects the virtual lower warp yarn end point P2 to the virtual cloth fell point P3 to be displayed in the shed portion image. That is, in a state where the virtual upper warp yarn end point P1 and the virtual lower warp yarn end point P2 are provisionally specified by the provisionally specifying unit 51, the reference line illustrating unit 52 causes the upper reference line H1 and the lower reference line H2 to be displayed at the same time. As a result, the triangle formed by connecting the three points of the virtual upper warp yarn end point P1, the virtual lower warp yarn end point P2, and the virtual cloth fell point P3 is virtually displayed.

As illustrated in FIG. 8, when the operator operates the input unit 35 to move the virtual cloth fell point P3, the reference line illustrating unit 52 changes lengths of the upper reference line H1 and the lower reference line H2, following the moving of the virtual cloth fell point P3, and displays them. As the virtual cloth fell point P3 moves away from the virtual upper warp yarn end point P1, the length of the upper reference line H1 becomes longer, and as the virtual cloth fell point P3 moves away from the virtual lower warp yarn end point P2, the length of the lower reference line H2 becomes longer. As a result, the length of each side of the triangle shown in the shed portion image is changed and the shape of the triangle is also changed.

Then, when the operator operates the input unit 35 to align the upper reference line H1 to the upper warp yarn Tu and align the lower reference line H2 with the lower warp yarn Td, the virtual cloth fell point P3 overlaps the cloth fell Wa in the shed portion image. Then, the virtual cloth fell point P3 is provisionally specified at a position of the cloth fell Wa. As a result, in the shed portion image, the virtual upper warp yarn end point P1 is provisionally specified so as to overlap the upper warp yarn end point W1, and the virtual lower warp yarn end point P2 is provisionally specified so as to overlap the lower warp yarn end point W2. In addition, in the shed portion image, the virtual cloth fell point P3 is provisionally specified so as to overlap the cloth fell Wa.

### <Decision unit>

The decision unit 53 decides the provisionally specified positions, that is, positions of the virtual upper warp yarn end point P1, the virtual lower warp yarn end point P2, the virtual cloth fell point P3, which are provisionally specified in the state where the upper reference line H1 is aligned with the upper warp yarn Tu and the lower reference line H2 is aligned with the lower warp yarn Td, in the shed portion image. More specifically, when the operation of the input unit 35 by the operator is released, the positions of the virtual upper warp yarn end point P1, the virtual lower warp yarn end point P2, and the virtual cloth fell point P3 are decided by the decision unit 53. Then, in the shed portion image, the range of the shed portion R defined by the virtual upper warp yarn end point P1, the virtual lower warp yarn end point P2, and the virtual cloth fell point P3 is decided. The virtual upper warp yarn end point P1 overlaps the upper warp yarn end point W1 and the virtual lower warp yarn end point P2 overlaps the lower warp yarn end point W2. In addition, the virtual cloth fell point P3 overlaps the cloth fell Wa. As a result, the range of the shed portion R is specified with high accuracy.

### <Illustrating unit>

The illustrating unit 54 illustrates a pseudo-abnormality in the shed portion R defined by the virtual upper warp yarn end point P1, the virtual lower warp yarn end point P2, and the virtual cloth fell point P3, which are decided by the decision unit 53. More specifically, the illustrating unit 54 causes a warp yarn T in the abnormal state to be artificially displayed in the shed portion image. The operator operates the input unit 35 to artificially display the warp yarn T extending from any point on at least one of the upper warp yarns Tu and the lower warp yarns Td. As illustrated in FIG. 8, the warp yarn T extending from any point on the upper warp yarn Tu is illustrated. This warp yarn T artificially displayed is shown as an abnormal warp yarn T in the shed portion image.

As a result, the pseudo-anomalous image in which the abnormal warp yarn T is located in the shed portion R is shown in the shed portion image and the pseudo-anomalous image is created. After the pseudo-anomalous image is created, the pseudo-anomalous image data containing the created pseudo-anomalous image are stored in the main storage unit 42b of the detector 42 and are learned as the pseudo-anomalous image data by the determination unit 43. Then, as the number of the pseudo-anomalous image data created by the pseudo-anomalous image creation unit 50 increases, the accuracy of classification by the determination unit 43 is increased.

### [Operation of embodiment]

The following will describe operation of the embodiment along with a method of creating the pseudo-anomalous image.

The operator starts the pseudo-anomalous image creation application to create the pseudo-anomalous image. Note that the operator captures images of the shed portion R in the normal state by the camera 32 in advance.

As illustrated in FIG. 6, the operation screen S displays the shed portion image display area Sa, the first operation button Sb, the second operation button Sc, the third operation button Sd, and the fourth operation button Se.

The operator presses the first operation button Sb by the operation of the input unit 35 to cause image data for creating the pseudo-anomalous image to be displayed. Note that the image data are selectable by pressing the first operation button Sb repeatedly. The pseudo-anomalous image creation unit 50 causes the selected image data to be displayed in the shed portion image display area Sa.

In the selected shed portion image, the cloth fell Wa is hidden behind the component F, and the upper warp yarn end point W1 and the lower warp yarn end point W2 are shown. The operator performs the operation to specify the range of the shed portion R in the shed portion image.

The operator presses the second operation button Sc by the operation of the input unit 35. This allows the provisionally specifying operation. The operator operates the input unit 35 to specify the virtual upper warp yarn end point P1 at the position of the upper warp yarn end point W1 in the shed portion image. Then, the virtual upper warp yarn end point P1 is provisionally specified by the provisionally specifying unit 51 so as to overlap the upper warp yarn end point W1 in the shed portion image. In addition, the operator operates the input unit 35 to specify the virtual lower warp yarn end point P2 at the position of the lower warp yarn end point W2 in the shed portion image. Then, the virtual lower warp yarn end point P2 is provisionally specified by the provisionally specifying unit 51 so as to overlap with the lower warp yarn end point W2 in the shed portion image. When the virtual upper warp yarn end point P1 and the virtual lower warp yarn end point P2 are provisionally specified in the shed portion image, as illustrated in FIG. 7, the reference line illustrating unit 52 causes the connecting reference line H3 that connects the virtual upper warp yarn end point P1 to the virtual lower warp yarn end point P2 to be displayed.

The operator operates the input unit 35 to provisionally specify the virtual cloth fell point P3 by specifying any position in the shed portion image. Then, the virtual cloth fell point P3 is shown in the shed portion image by the reference line illustrating unit 52. At the same time that the virtual cloth fell point P3 is shown, the upper reference line H1 that connects the virtual upper warp yarn end point P1 to the virtual cloth fell point P3 and the lower reference line H2 that connects the virtual lower warp yarn end point P2 to the virtual cloth fell point P3 are shown in the shed portion image by the reference line illustrating unit 52. Then, the triangle having the virtual upper warp yarn end point P1, the virtual lower warp yarn end point P2, and the virtual cloth fell point P3 as three vertices is shown in the shed portion image.

Subsequently, the operator operates the input unit 35 to move the virtual cloth fell point P3 to the position where the cloth fell Wa is assumed to be located. Then, the shape of the triangle changes as the virtual cloth fell point P3 moves.

As illustrated in FIG. 8, the operator operates the input unit 35 to align the upper reference line H1 with the upper warp yarn Tu and align the lower reference line H2 with the lower warp yarn Td. When the upper reference line H1 is aligned with the upper warp yarn Tu and the lower reference line H2 is aligned with the lower warp yarn Td, the virtual cloth fell point P3 is shown at the position where the cloth fell Wa is assumed to be located. After that, when the operator releases the operation of the input unit 35, the virtual cloth fell point P3 is provisionally specified at the position where the cloth fell Wa is assumed to be located in the shed portion image by the provisionally specifying unit 51.

The operator operates the input unit 35 to decide the virtual upper warp yarn end point P1, the virtual lower warp yarn end point P2, and the virtual cloth fell point P3 at the provisionally specified positions, so that the positions of the virtual upper warp yarn end point P1, the virtual lower warp yarn end point P2, and the virtual cloth fell point P3 are decided. That is, the range of the shed portion R is defined in the shed portion image. This allows the range of the shed portion R to be specified with high accuracy even when the cloth fell Wa is hidden in the shed portion image.

The operator presses the third operation button Sd by the operation of the input unit 35. This allows the operation of illustrating a pseudo-abnormality in the shed portion image. The operator operates the input unit 35 to artificially display the warp yarn T that extends from any point on either of the upper warp yarns Tu or the lower warp yarns Td. As a result, the pseudo-anomalous image that shows the abnormal warp yarn T located in the shed portion R is created.

The operator presses the fourth operation button Se by the operation of the input unit 35. The pseudo-anomalous image data containing the created pseudo-anomalous image are stored in the main storage unit 42b of the detector 42 and are learned as the pseudo-anomalous image data by the determination unit 43.

The above-described embodiment provides the following advantageous effects.
(1) In the pseudo-anomalous image creation unit 50, the reference line illustrating unit 52 illustrates the upper reference line H1 that is aligned with the upper warp yarn Tu and the lower reference line H2 that is aligned with the lower warp yarn Td. When the upper reference line H1 is aligned with the upper warp yarn Tu and the lower reference line H2 is aligned with the lower warp yarn Td, the virtual cloth fell point P3 is located at a position where the upper reference line H1 intersects with the lower reference line H2. The cloth fell Wa is located at a position where the upper warp yarn Tu intersects with the lower warp yarn Td, so that the virtual cloth fell point P3 located at the position where the upper reference line H1 intersects with the lower reference line H2 is located on the cloth fell Wa. In addition, the virtual upper warp yarn end point P1 overlaps the upper warp yarn Tu and the virtual lower warp yarn end point P2 overlaps the lower warp yarn Td. This positions the three points of the virtual upper warp yarn end point P1, the virtual lower warp yarn end point P2, and the virtual cloth fell point P3 at the positions where the three points defines the shed portion R with high accuracy. As a result, when the decision unit 53 decides the three points of the virtual upper warp yarn end point P1, the virtual lower warp yarn end point P2, and the virtual cloth fell point P3, the positions of the upper warp yarn end point W1, the lower warp yarn end point W2, and the cloth fell Wa are specified in the shed portion image with high accuracy, so that the range of the shed portion R is specified with high accuracy. Then, the illustrating unit 54 illustrates the pseudo-abnormality in the range of the shed portion R specified with high accuracy, so that the pseudo-anomalous image that shows the pseudo-abnormality created with high accuracy is created. As a result, it is suppressed that the accuracy of classification by the classification model is decreased in the loom abnormality detector 30.
(2) When the virtual cloth fell point P3 is provisionally specified and moved after the virtual upper warp yarn end point P1 and the virtual lower warp yarn end point P2 are provisionally specified in the shed portion image, the reference line illustrating unit 52 causes the upper reference line H1 and the lower reference line H2 to be displayed at the same time. Since the position where the upper reference line H1 intersects with the lower reference line H2 is provisionally specified as the virtual cloth fell point P3, the reference line illustrating unit 52 causes the virtual cloth fell point P3 to be displayed at the same time that the reference line illustrating unit 52 causes the upper reference line H1 and the lower reference line H2 to be displayed. As a result, the virtual cloth fell point P3 is shown at the position where the cloth fell Wa is assumed to be located at the same time that the upper reference line H1 is aligned with the upper warp yarns Tu and the lower reference line H2 is aligned with the lower warp yarn Td. Thus, as compared with a case where the upper reference line H1 and the lower reference line H2 are separately illustrated and displayed, efficiency of the operation of displaying the position where the cloth fell Wa is assumed to be located is improved.
(3) The reference line illustrating unit 52 causes the upper reference line H1 and the lower reference line H2 to be displayed in a different manner from the connecting reference line H3. Thus, when the virtual cloth fell point P3 is moved so as to align the upper reference line H1 with the upper warp yarn Tu and align the lower reference line H2 with the lower warp yarn Td, changes of the upper reference line H1 and the lower reference line H2 are easily identified. In addition, the process of moving the virtual cloth fell point P3 to the position where the cloth fell Wa is assumed to be located is visible, which makes the operation of specifying the position where the cloth fell Wa is assumed to be located easy. Furthermore, the range of the shed portion R is easily seen due to the upper reference line H1, the lower reference line H2, and the connecting reference line H3.
(4) The cloth fell Wa is present at the position where the upper warp yarn Tu intersects with the lower warp yarn Td. In addition, the upper warp yarn end point W1 is located so as to overlap the upper warp yarn Tu and the lower warp yarn end point W2 is located so as to overlap the lower warp yarn Td. Then, the range of the shed portion R is specified with high accuracy using the virtual upper warp yarn end point P1 provisionally specified on the upper warp yarn Tu, the virtual lower warp yarn end point P2 provisionally specified on the lower warp yarn Td, the upper reference line H1 aligned with the upper warp yarn Tu, and the lower reference line H2 aligned with the lower warp yarn Td.
(5) The reference line illustrating unit 52 causes the connecting reference line H3 that connects the virtual upper warp yarn end point P1 to the virtual lower warp yarn end point P2 to be displayed in the shed portion image. With this operation, the component around the shed portion R is also displayed in the shed portion image display area Sa. Thus, the range of the shed portion R is easily seen by displaying the upper reference line H1, the lower reference line H2, and the connecting reference line H3.
(6) The reference line illustrating unit 52 causes the upper reference line H1 and the lower reference line H2 to be displayed by the broken lines. With this operation, for example, unlike a case where the reference line illustrating unit 52 causes the upper reference line H1 to be displayed by a solid line, when the upper reference line H1 is aligned with the upper warp yarn Tu, their solid lines do not overlap with each other. That is, in each of the case where the upper reference line H1 is aligned with the upper warp yarn Tu and the case where the lower reference line H2 is aligned with the lower warp yarn Td, whether their lines are aligned with each other or not is easily identified.

### [Modification]

The present embodiment may be modified as follows. The present embodiment and the following modifications may be combined with each other as long as they do not technically contradict each other.

The reference line illustrating unit 52 may separately illustrate the upper reference line H1 that connects the virtual upper warp yarn end point P1 to the virtual cloth fell point P3 and the lower reference line H2 that connects the virtual lower warp yarn end point P2 and the virtual cloth fell point P3, wherein the virtual upper warp yarn end point P1, the virtual lower warp yarn end point P2, and the virtual cloth fell point P3 are provisionally specified. The following will describe a method of specifying the range of the shed portion R in this case.

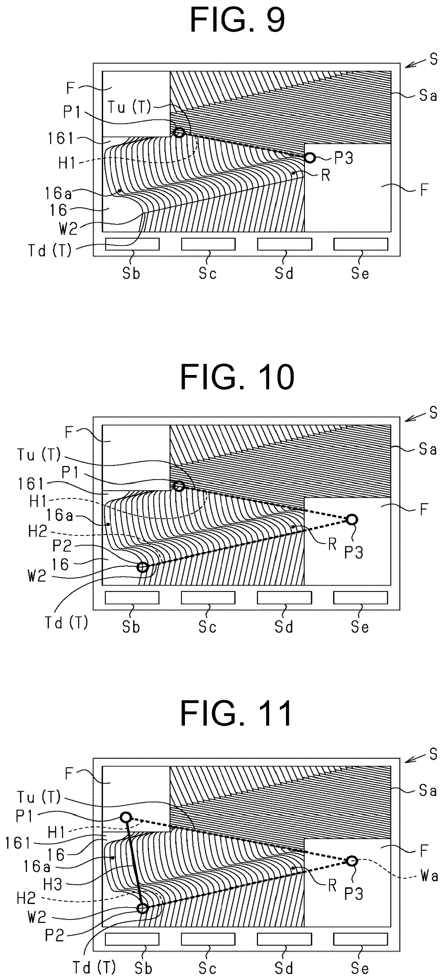

As illustrated in FIG. 9, the operator provisionally specifies the virtual upper warp yarn end point P1 so as to overlap with the upper warp yarn Tu in the shed portion image. Here, in the shed portion image, it is assumed that the upper warp yarn end point W1 and the cloth fell Wa are hidden behind the components F. The operator provisionally specifies the virtual upper warp yarn end point P1 at a position that is assumed near the upper warp yarn end point W1 on the upper warp yarn Tu in the shed portion image. Then, as illustrated in FIG. 10, the operator provisionally specifies the virtual cloth fell point P3 so as to overlap the upper warp yarn Tu, and illustrates the upper reference line H1 that connects the virtual upper warp yarn end point P1 to the virtual cloth fell point P3. While the operator aligns the upper reference line H1 with the upper warp yarn Tu, the operator moves the virtual cloth fell point P3 to a position where the cloth fell Wa is assumed to be located.

Next, the operator provisionally specifies the virtual lower warp yarn end point P2 so as to overlap the lower warp yarn Td in the shed portion image. The operator provisionally specifies the virtual lower warp yarn end point P2 so as to overlap the lower warp yarn end point W2 on the lower warp yarn Td in the shed portion image. While the operator aligns the lower reference line H2 with the lower warp yarn Td, the operator moves the lower reference line H2 toward the virtual cloth fell point P3. Then, the operator adjusts the lower reference line H2 so as to intersect with the upper reference line H1, and then, the operator provisionally specifies the virtual cloth fell point P3 at the position where the upper reference line H1 intersects with the lower reference line H2.

Although the virtual upper warp yarn end point P1, the virtual lower warp yarn end point P2, and the virtual cloth fell point P3 are provisionally specified, the virtual upper warp yarn end point P1 is provisionally specified outside the component F. As described above, since the upper warp yarn end point W1 is hidden behind the component F, the position of the virtual upper warp yarn end point P1 provisionally specified is located away from the upper warp yarn end point W1. Thus, the operator slightly adjusts the position of the virtual upper warp yarn end point P1 so that the virtual upper warp yarn end point P1 approaches the upper warp yarn end point W1 that is hidden behind the component F.

Since the upper warp yarn end point W1 that is hidden behind the component F is located on an extension line of the upper warp yarn Tu, as illustrated in FIG. 11, the operator operates the input unit 35 to move the virtual upper warp yarn end point P1 toward the component F along the upper warp yarn Tu. Here, the operator moves the virtual upper warp yarn end point P1 to the position where the upper warp yarn end point W1 is assumed to be located in the entire shed portion image.

Even when the upper reference line H1 and the lower reference line H2 are separately illustrated as described above, the cloth fell Wa is located at the position where the upper reference line H1 intersects with the lower reference line H2, so that the virtual cloth fell point P3 is provisionally specified with high accuracy.

In addition, even after the virtual upper warp yarn end point P1, the virtual lower warp yarn end point P2, and the virtual cloth fell point P3 are provisionally specified, the pseudo-anomalous image creation unit 50 may adjust the positions of the virtual upper warp yarn end point P1, the virtual lower warp yarn end point P2, and the virtual cloth fell point P3. This allows the positions of the virtual upper warp yarn end point P1, the virtual lower warp yarn end point P2, and the virtual cloth fell point P3 to be specified with high accuracy.

When the cloth fell Wa is shown and the lower warp yarn end point W2 is hidden behind the component F in the shed portion image, the range of the shed portion R may be specified by provisionally specifying the virtual lower warp yarn end point P2 using the pseudo-anomalous image creation unit 50. In this case, after the virtual upper warp yarn end point P1 , the virtual lower warp yarn end point P2, and the virtual cloth fell point P3 are provisionally specified, the position of the virtual lower warp yarn end point P2 may be slightly adjusted.

In the shed portion image in which the upper warp yarn end point W1, the lower warp yarn end point W2, and the cloth fell Wa are all hidden behind the component F, the range of the shed portion R may be specified by provisionally specifying the virtual upper warp yarn end point P1, the virtual lower warp yarn end point P2, and the virtual cloth fell point P3 using the pseudo-anomalous image creation unit 50. In this case, the positions of the virtual upper warp yarn end point P1, the virtual lower warp yarn end point P2, the virtual cloth fell point P3 are provisionally specified by overlapping the upper reference line H1 and the lower reference line H2 with the upper warp yarn Tu and the lower warp yarn Td, which are shown in the shed portion image, respectively.

The upper reference line H1 and the lower reference line H2 may be displayed by solid lines or in any other manner, instead of the broken lines.

Only the shed portion image display area Sa may be displayed on the operation screen S.

In the case where the upper warp yarn end point W1 and the lower warp yarn end point W2 are shown in the shed portion image as the embodiment, the reference line illustrating unit 52 need not cause the connecting reference line H3 to be displayed when the virtual upper warp yarn end point P1 and the virtual lower warp yarn end point P2 are provisionally specified.

In the embodiment, the pseudo-anomalous image is created by modifying the normal image. However, the pseudo-anomalous image may be created by modifying the anomalous image.

## Claims

1. A loom abnormality detector (30) comprising:
a classification model that has learned a normal image that shows a shed portion (R) in a normal state and an anomalous image that shows the shed portion (R) in an abnormal state as a shed portion image that shows the shed portion (R) defined by a reed (16), upper warp yarns (Tu) above a weft yarn (Y), and lower warp yarns (Td) below the weft yarn (Y), and a cloth fell (Wa) at which the upper warp yarns (Tu) intersect with the lower warp yarns (Td),
the loom abnormality detector (30) being configured to detect a weaving abnormality from the shed portion image captured by a camera (32) using the classification model, **characterized in that**
the loom abnormality detector (30) further includes a pseudo-anomalous image creation unit (50) configured to artificially create the abnormal image from the shed portion image captured by the camera (32), and
the pseudo-anomalous image creation unit (50) includes:
a provisionally specifying unit (51) configured to provisionally specify a virtual upper warp yarn end point (P1), a virtual lower warp yarn end point (P2), and a virtual cloth fell point (P3) in the shed portion image displayed on an operation screen (S) of a display unit (27a), the virtual upper warp yarn end point (P1) being a point that is assumed to an upper warp yarn end point (W1) of the upper warp yarn (Tu) extending forward out from the reed (16) and defining an inlet (R1) of the shed portion (R), the virtual lower warp yarn end point (P2) being a point that is assumed to a lower warp yarn end point (W2) of the lower warp yarn (Td) extending forward out from the reed (16) and defining, together with the upper warp yarn (Tu), the inlet (R1) of the shed portion (R), the virtual cloth fell point (P3) being a point that is assumed to be an end point of the cloth fell (Wa) at the inlet (R1) of the shed portion (R);
a reference line illustrating unit (52) configured to illustrate an upper reference line (H1) that connects the virtual upper warp yarn end point (P1) to the virtual cloth fell point (P3) and a lower reference line (H2) that connects the virtual lower warp yarn end point (P2) to the virtual cloth fell point (P3);
a decision unit (53) configured to decide positions of the virtual upper warp yarn end point (P1), the virtual lower warp yarn end point (P2), and the virtual cloth fell point (P3), which are provisionally specified in a state where the upper reference line (H1) is aligned with the upper warp yarn (Tu) and the lower reference line (H2) is aligned with the lower warp yarn (Td); and
an illustrating unit (54) configured to illustrate a pseudo-abnormality in the shed portion (R) defined by the virtual upper warp yarn end point (P1), the virtual lower warp yarn end point (P2), and the virtual cloth fell point (P3) decided by the decision unit (53).

2. The loom abnormality detector (30) according to claim 1, **characterized in that**
in a state where the virtual upper warp yarn end point (P1) and the virtual lower warp yarn end point (P2) are provisionally specified and the virtual cloth fell point (P3) is provisionally specified by the provisionally specifying unit (51), the reference line illustrating unit (52) causes the upper reference line (H1) and the lower reference line (H2) to be displayed at the same time.

3. The loom abnormality detector (30) according to claim 2, **characterized in that**
the reference line illustrating unit (52) causes a connecting reference line (H3) that connects the virtual upper warp yarn end point (P1) to the virtual lower warp yarn end point (P2) to be displayed.

4. The loom abnormality detector (30) according to claim 3, **characterized in that**
the reference line illustrating unit (52) causes the upper reference line (H1) and the lower reference line (H2) in a different manner from the connecting reference line (H3).
